# EUROPEAN PATENT APPLICATION

(11) **EP 4 708 535 A1**
(43) Date of publication of application: **11.03.2026**
(21) Application number: 24940890.7
(22) Date of filing: 19.11.2024
(51) Int. Cl.: H01M 50/383, H01M 10/658, H01M 50/249, H01M 10/42, A62C 3/16, A62C 37/14, H01M 10/613

(54) **BATTERY MODULE, BATTERY PACK, AND VEHICLE**

(30) Priority: 17.06.2024 KR 20240078185
(71) Applicant: LG ENERGY SOLUTION, LTD., Seoul 07335 (KR)
(72) Inventor: Choi, Beom-Seok, Yuseong-Gu, Daejeon 34122 (KR); Kim, Soo-Youl, Yuseong-Gu, Daejeon 34122 (KR); Park, Gi-Chan, Yuseong-Gu, Daejeon 34122 (KR); Chang, Hyuk-Kyun, Yuseong-Gu, Daejeon 34122 (KR)
(74) Representative: BCKIP Part mbB
(86) International application number: PCT/KR2024/018292
(87) International publication number: WO 2025/263703

(57) **Abstract**

Disclosed are a battery module, a battery pack, and a vehicle. A battery module according to an embodiment of the present disclosure may include: a plurality of battery cells; a module case in which the plurality of battery cells are stored; and a flame propagation prevention member disposed between the plurality of battery cells inside the module case, and the flame propagation prevention member may be configured to change its shape when a thermal event occurs so as to block a gap formed between the module case and the battery cells.

## Description

### TECHNICAL FIELD

This application is based on and claims priority from Korean Patent Application No. 10-2024-0078185, filed on June 17, 2024, with the Korean Intellectual Property Office, the disclosure of which is incorporated herein in its entirety by reference.

The present disclosure relates to a battery module, a battery pack, and a vehicle and, more particularly, to a battery module and battery pack capable of preventing heat concentration and the propagation of flames, gases, or high-temperature particles, and a vehicle including the same.

### BACKGROUND ART

In general, secondary batteries refer to batteries capable of being repeatedly charged and discharged, such as lithium-ion batteries, lithium-polymer batteries, nickel-cadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery pack, which is manufactured by configuring a battery module by connecting a plurality of battery cells in series, parallel, or a combination thereof and reconnecting these battery modules in series, parallel, or a combination thereof, has been widely used.

Although lithium secondary batteries are currently in the spotlight due to their advantages such as high operating voltage and significantly high energy density, since they use organic electrolytes, if the lithium secondary batteries are overcharged, it may cause overcurrent and overheating, leading to explosion or fire in the worst cases.

Conventional battery modules may have a refractory pad disposed between a battery cell and a neighboring battery cell, which are stored inside the battery module.

Here, the refractory pad is tightly bonded to the module case, so that a battery cell and a neighboring battery cell thereof (or multiple battery cells and neighboring battery cells thereof) are isolated, and air flow is blocked by the refractory pad.

However, even in a normal state where no thermal event occurs, the flow of air from any battery cell to another battery cell is blocked by the refractory pad, so it is impossible to obtain thermal equilibrium over the entire battery module.

In addition, if air does not flow in a normal state as described above, the temperature rises and heat is concentrated at a certain point, thereby increasing the possibility of explosion of the battery module or battery pack.

In this case, if a flame is generated due to an explosion in any one battery module, the flame may spread to other battery modules, causing thermal runaway. If the flame leaks out due to the thermal runaway, a driver of the electric vehicle may be burned or put in a dangerous situation.

In addition, the battery module or battery pack may be damaged or burned down due to a chain reaction of flames caused by flame propagation, making it impossible to secure the stability of the battery module or battery pack.

### DISCLOSURE

### Technical Problem

The present disclosure is designed to solve the problems of the related art, and therefore the present disclosure is directed to providing a battery module and battery pack that enable smooth airflow and prevent heat concentration in a normal state of the battery module, thereby providing a uniform thermal distribution, but prevent flames, gases, or high-temperature particles from spreading to neighboring battery cells or battery modules when a thermal event occurs, and a vehicle including the same.

In addition, the present disclosure is to provide a battery module and battery pack capable of discharging flames, gases, or high-temperature particles in a preset direction, and a vehicle including the same.

In addition, the present disclosure is to provide a battery module and battery pack capable of preventing thermal runaway by preventing a chain reaction of flames due to flame propagation, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; a module case in which the plurality of battery cells are stored; and a flame propagation prevention member disposed between the plurality of battery cells inside the module case, wherein the flame propagation prevention member may be configured to change its shape when a thermal event occurs so as to block a gap formed between the module case and the battery cells.

In an embodiment, the module case may include an upper module case, and the flame propagation prevention member may be configured to change its shape when swelling occurs in the cell so as to come into contact with the upper module case.

In an embodiment, the flame propagation prevention member may include: a main part pressurized by the battery cell when the swelling occurs in the cell; and a head part coupled to a top of the main part and configured to come into contact with the upper module case.

In an embodiment, the main part may be formed of a plastic-injection molded product or stainless steel.

In an embodiment, the head part may be formed of heat-resistant plastic.

In an embodiment, a convection heat barrier may be provided inside the main part to block heat transfer by convection inside the main part.

In an embodiment, a coupling hole may be formed in the main part, and the head part may be coupled to the coupling hole.

In an embodiment, the battery module may further include an extinguishing member coupled to the module case and containing an extinguishing agent, and the head part may be configured to break the extinguishing member so that the extinguishing agent may be provided to flame.

In an embodiment, the head part may be configured so that a cross-sectional width decreases from bottom to top.

In an embodiment, the head part may have a sharp upper end.

In an embodiment, the module case may have a venting hole formed therein, and if a movement path is blocked due to a change in the shape of the flame propagation prevention member, flame or gas may be guided to the venting hole.

In an embodiment, the battery module may further include a cooling member configured to cool the battery cell, and the flame propagation prevention member may be formed of a thermally conductive material and may be in contact with the cooling member.

In an embodiment, the flame propagation prevention member may not come into contact with the cooling member and, if the shape of the flame propagation prevention member changes when a thermal event occurs, come into contact with the cooling member.

In another aspect of the present disclosure, there is provided a battery pack including the battery module described above, and there is provided a vehicle including the battery module described above.

Meanwhile, in another aspect of the present disclosure, there is provided a battery pack including: a plurality of battery cells; a pack case in which the plurality of battery cells are stored; and a flame propagation prevention member disposed between the plurality of battery cells inside the pack case, wherein the flame propagation prevention member may change its shape when a thermal event occurs so as to block a gap formed between the pack case and the battery cells, and there is provided a vehicle including the battery pack described above.

### Advantageous Effects

The embodiments of the present disclosure have the effect of enabling smooth airflow and preventing heat concentration in a normal state of the battery module to provide a uniform thermal distribution, but preventing flames, gases, or high-temperature particles from spreading to neighboring battery cells or battery modules when a thermal event occurs.

In addition, the embodiments of the present disclosure have the effect of discharging flames, gas, or high-temperature particles in a preset direction.

In addition, the embodiments of the present disclosure have the effect of preventing thermal runaway by preventing a chain reaction of flames due to flame propagation.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically illustrating a battery module according to a first embodiment of the present disclosure.
FIG. 2 is a cross-sectional view taken along line A-A' in FIG. 1.
FIG. 3 is a cross-sectional view of FIG. 2 in which the shape of a flame propagation prevention member is changed during a thermal event.
FIG. 4 is a cross-sectional view of a battery module according to a second embodiment of the present disclosure.
FIG. 5 is a cross-sectional view of FIG. 4 in which the shape of a flame propagation prevention member is changed during a thermal event.
FIG. 6 is a cross-sectional view of a flame propagation prevention member in a battery module according to a third embodiment of the present disclosure.
FIG. 7 is a cross-sectional view of a flame propagation prevention member in a battery module according to a fourth embodiment of the present disclosure.
FIG. 8 is a cross-sectional view of a battery module according to a fifth embodiment of the present disclosure.
FIG. 9 is a cross-sectional view of a battery module according to a sixth embodiment of the present disclosure.
FIG. 10 is a cross-sectional view of a battery module according to a seventh embodiment of the present disclosure.
FIG. 11 is a diagram schematically illustrating the configuration of a battery pack including a battery module according to respective embodiments of the present disclosure.
FIG. 12 is a diagram illustrating a vehicle including the battery pack in FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

In addition, the expression "an element is 'connected' or 'coupled' to another element" should be understood that the elements may be directly connected or coupled to each other and that the elements may be indirectly connected or coupled to each other through a connecting member therebetween.

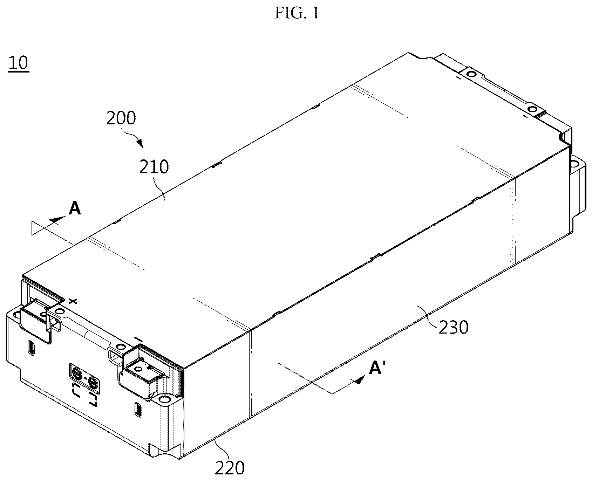

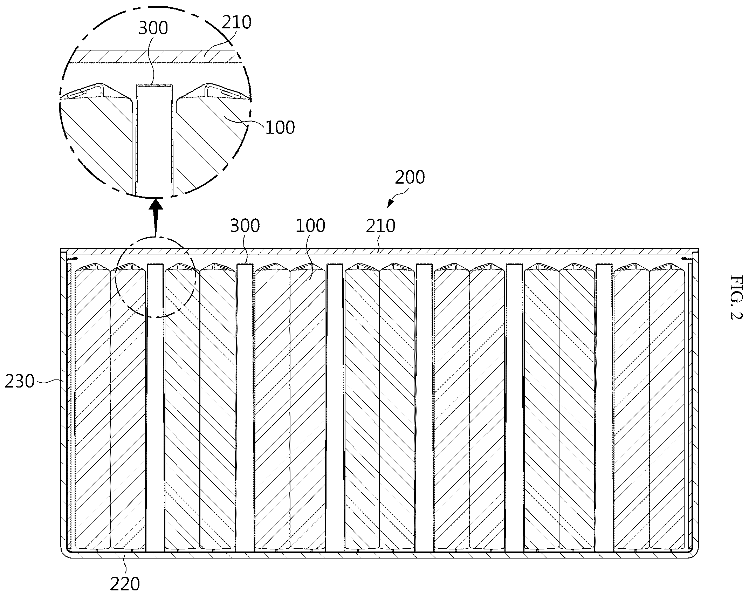

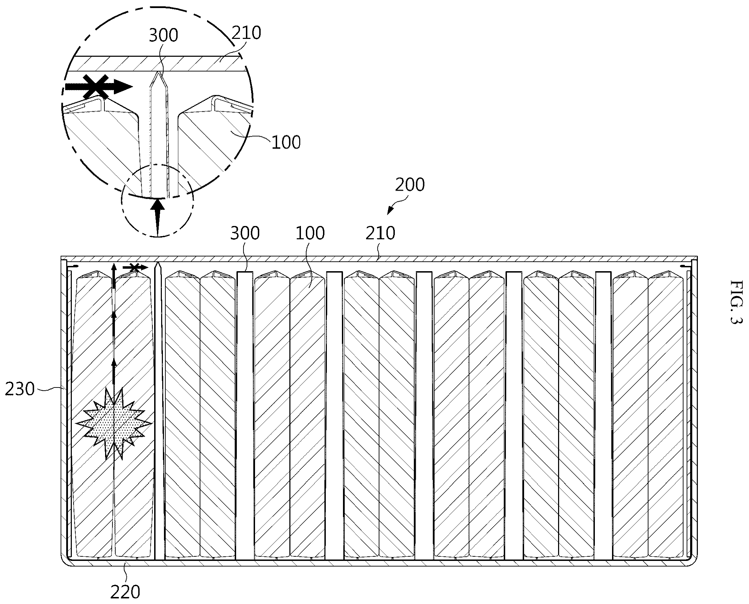

FIG. 1 is a perspective view schematically illustrating a battery module according to a first embodiment of the present disclosure, FIG. 2 is a cross-sectional view taken along line A-A' in FIG. 1, and FIG. 3 is a cross-sectional view of FIG. 2 in which the shape of a flame propagation prevention member is changed during a thermal event.

Referring to FIGS. 1 to 3, a battery module 10 according to an embodiment of the present disclosure includes a plurality of battery cells 100, a module case 200, and a flame propagation prevention member 300.

Various types of battery cells 100 may be provided. For example, the battery cells 100 may include at least one of a pouch-type battery cell 100, a cylindrical battery cell 100, and a prismatic battery cell 100. However, for convenience of explanation, the following description will be made based on the case where the battery cell 100 is a pouch-type battery cell 100.

The plurality of battery cells 100 may be stacked on each other. The battery cells 100 may have various structures, and the plurality of battery cells 100 may be stacked in various ways.

The battery cell 110 may have a structure in which a plurality of unit cells, configured as positive electrode plate-separator-negative electrode plate sequentially laminated, or a plurality of bi-cells, configured as positive electrode plate-separator-negative electrode plate-separator-positive electrode plate-separator-negative electrode plate sequentially laminated, are stacked depending on the battery capacity.

The battery cell 110 may be provided with an electrode lead. The electrode lead is a kind of terminal exposed to the outside and connected to an external device, and may be made of a conductive material. The electrode lead may include a positive electrode lead and a negative electrode lead.

The positive electrode lead and the negative electrode lead may be disposed in opposite directions along the longitudinal direction of the battery cell 110, or the positive electrode lead and the negative electrode lead may be positioned in the same direction along the longitudinal direction of the battery cell 110.

For example, the battery cells 100 may be accommodated in a module case 200, and the module case 200 accommodating the battery cells 100 may be stored in a pack case 21 to form a battery pack 20.

However, the disclosure is not limited thereto, and the module case 200 may be removed to reduce the weight and volume of the module case 200, and in this case, the battery cells 100 may be directly stored in the pack case 21 of the battery pack 20. According to this type, the battery cells 100 may be further stored in the space occupied by the module case 200 of the battery module 10 inside the battery pack 20, thereby increasing space efficiency and improving battery capacity.

However, for the convenience of explanation, the following description will be made based on the case in which the module case 200 accommodating the battery cells 100 is provided. That is, an embodiment in which a battery module 10 is stored in a battery pack 20 will be described below.

A plurality of battery cells 100 are stored in a module case 200. Here, as described above, the plurality of battery cells 100 may be stacked in the form of a stack and then be stored in the module case 200. In addition, the module case 200 surrounds the plurality of battery cells 100 to protect the battery cells 100 from external vibration or impact.

For example, the module case 200 may include an upper module case 210, a lower module case 220, and a side module case 230. In addition, the module case 200 surrounds the battery cells 100 to protect the battery cells 100 from external vibration or impact.

The module case 200 may include a mica plate formed of mica having insulation and heat resistance to prevent flame leakage. Here, the mica plate may include not only a flat mica plate but also a mica plate having the shape of a mixture of a flat surface and a curved surface.

The module case 200 may be formed in a shape corresponding to the shape of the stack of battery cells 100. For example, if the stack of battery cells 100 is formed in a hexahedron with a rectangular cross-section, the module case 200 may also be formed in a hexahedron corresponding thereto.

The module case 200 may be manufactured by, for example, bending a metal plate, so that the module case 200 may be formed in an integral form. If the module case 200 is manufactured in an integral form, the coupling process may be simplified. Alternatively, the module case 200 may be configured as separate parts and then coupled to each other by welding or the like. However, the material of the module case 200 is not limited to metal.

If the module case 200 is formed in an integrated form or coupled by welding, adhesive is unnecessary, so that even if the temperature inside the battery module 10 rises, the upper module case 210 may not be separated from the side module case 230, thereby preventing flames, gases, or high-temperature particles from being released in an undesirable direction at once.

Referring to FIG. 2, the flame propagation prevention member 300 is disposed between a plurality of battery cells 100 inside the module case 200. In addition, the flame propagation prevention member 300 is configured to change its shape when a thermal event occurs.

For example, when swelling occurs in the battery cell 100, the battery cell 100 expands as shown in FIG. 3, and accordingly, if the expanded battery cell 100 presses the flame propagation prevention member 300, the flame propagation prevention member 300 is compressed and changes its shape. Then, as shown in FIG. 3, the flame propagation prevention member 300 having the changed shape comes into contact with the upper module case 210 to block the gap formed between the upper module case 210 of the module case 200 and the battery cells 100.

That is, the flame propagation prevention member 300 is spaced apart from the upper module case 210 in a normal state of the battery module 10, as shown in FIG. 2, so that air may flow smoothly through the space between the upper module case 210 and the battery cells 100, thereby preventing the heat concentration on an arbitrary portion. In addition, by preventing the heat concentration, the battery module 10 may have a uniform thermal distribution overall.

However, when a thermal event occurs, the flame propagation prevention member 300 comes into contact with the upper module case 210 to block the gap formed between the upper module case 210 and the battery cells 100, so the air flow is also blocked, thereby preventing flame, gas, or high-temperature particles from spreading to neighboring battery cells 100 or other battery modules 10.

In addition, there is an effect of preventing thermal runaway by preventing a chain reaction of flames due to flame propagation.

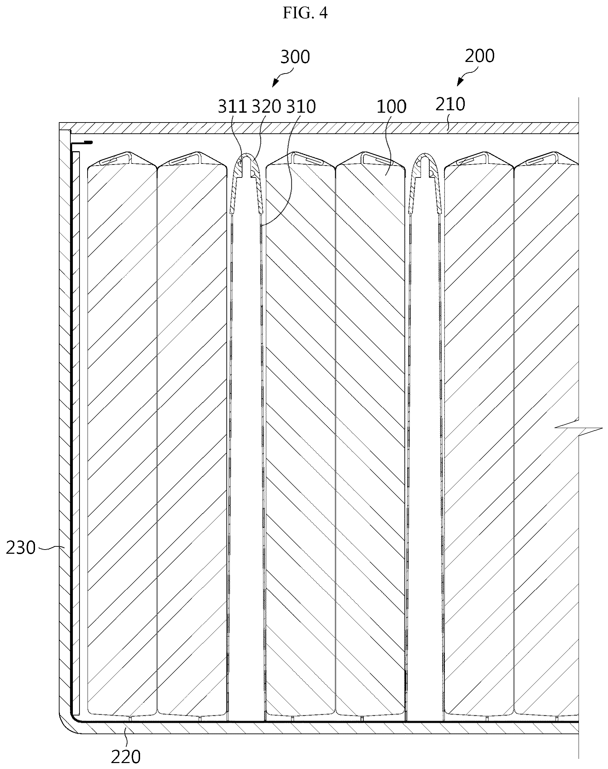

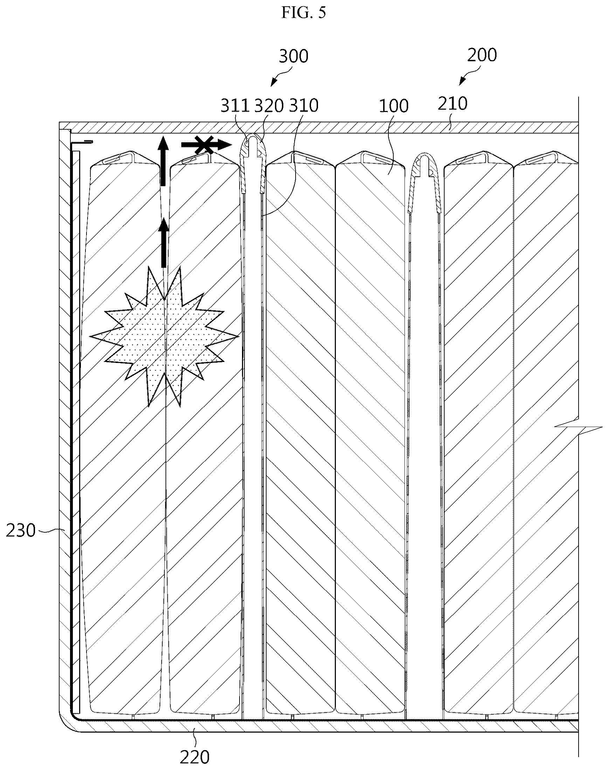

FIG. 4 is a cross-sectional view of a battery module according to a second embodiment of the present disclosure, and FIG. 5 is a cross-sectional view of FIG. 4 in which the shape of a flame propagation prevention member is changed during a thermal event.

The second embodiment of the present disclosure is different from the first embodiment in that the flame propagation prevention member 300 includes a head part 320. However, some descriptions of the first embodiment, which are common with the second embodiment, will also be applied to the second embodiment. In addition, some descriptions of the second embodiment, which are applicable to the first embodiment, may be applied to the first embodiment.

Referring to FIG. 4 and FIG. 5, the flame propagation prevention member 300 may include a main part 310 and a head part 320.

The main part 310 is pressurized by the battery cell 100 when swelling occurs in the cell. In addition, the main part 310 is configured to change its shape by the pressurization of the battery cell 100.

In addition, the main part 310 may be formed of various materials, and for example, may be formed of a plastic-injection molded product or stainless steel, but the material of the main part 310 is not limited thereto.

In addition, a coupling hole 311 may be formed in the main part 310, and the head part 320 may be coupled to the coupling hole 311 of the main part 310.

The head part 320 is coupled to the top of the main part 310 and is configured to be in contact with the upper module case 210. That is, when the shape of the main part 310 is changed, the head part 320 may come into contact with the upper module case 210 to block the movement path of flame, gas, or high-temperature particles, thereby preventing the propagation of flame or the like.

The head part 320 may be configured as various materials, and may be formed of, for example, heat-resistant plastic, but the material of the head part 320 is not limited thereto.

The head part 320 may be coupled to the coupling hole 311 formed in the main part 310. The head part 320 may be coupled to the coupling hole 311 of the main part 310 in various ways. For example, a coupling protrusion may be formed in the head part 320, and the coupling protrusion formed in the head part 320 may be coupled to the coupling hole 311 formed in the main part 310.

Alternatively, the head part 320 may be coupled to the main part 310 by a fusion method such as hot melting, and in this case, the head part 320 may be configured to be melted and fused to the coupling hole 311 of the main part 310.

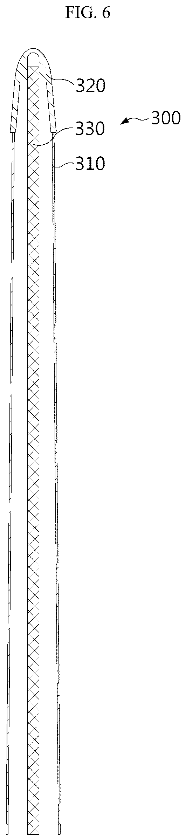

FIG. 6 is a cross-sectional view of a flame propagation prevention member in a battery module according to a third embodiment of the present disclosure.

The third embodiment of the present disclosure is different from the first and second embodiments in that a convection heat barrier 330 is provided inside the main part 310 of the flame propagation prevention member 300. However, some descriptions of the first or second embodiment, which are common with the third embodiment, will also be applied to the third embodiment. In addition, some descriptions of the third embodiment, which are applicable to the first or second embodiment, may be applied to the first or second embodiment.

Referring to FIG. 6, the convection heat barrier 330 may be disposed inside the main part 310 of the flame propagation prevention member 300 to block heat transfer due to convection inside the main part 310. That is, if the temperature of the battery cell 100 rises due to flame or the like when a thermal event occurs, heat is transferred to the main part 310 of the flame propagation prevention member 300 in contact with the battery cell 100. If the main part 310 has a hollow space therein, heat may be transferred by convection of the air existing inside the main part 310.

A convection heat barrier 330 may be provided inside the main part 310 in order to block heat transfer by convection of the air existing inside the main part 310 described above.

The convection heat barrier 330 may be disposed in various ways, and for example, it may be disposed vertically inside the main part 310 as shown in FIG. 6, but is not limited thereto.

In addition, the convection heat barrier 330 may be made of various insulating materials, such as silicone, but the material of the convection heat barrier 330 is not limited thereto.

Although FIG. 6 shows that the flame propagation prevention member 300 includes the main part 310 and the head part 320, it is not limited thereto, and the flame propagation prevention member 300 may be configured as only the main part 310, excluding the head part 320.

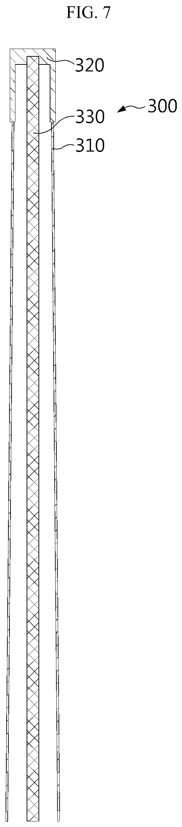

FIG. 7 is a cross-sectional view of a flame propagation prevention member in a battery module according to a fourth embodiment of the present disclosure.

The fourth embodiment of the present disclosure is different from the first to third embodiments in that the upper side of the head part 320 of the flame propagation prevention member 300 is formed flat. However, some descriptions of the first to third embodiments, which are common with the fourth embodiment, will also be applied to the fourth embodiment. In addition, some descriptions of the fourth embodiment, which are applicable to the first to third embodiments, may be applied to the first to third embodiments.

Referring to FIG. 7, the head part 320 of the flame propagation prevention member 300 may be formed flat. If the head part 320 of the flame propagation prevention member 300 is formed flat as described above, the contact area between the head part 320 and the upper module case 210 is sufficient to reliably prevent the movement of flame or the like.

Although the convection heat barrier 330 is illustrated in FIG. 7, the convection heat barrier 330 may be excluded in another embodiment.

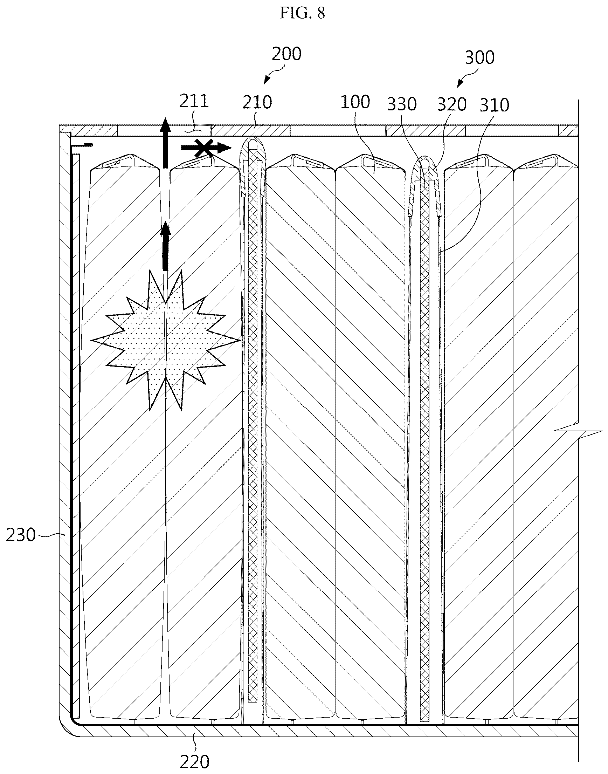

FIG. 8 is a cross-sectional view of a battery module according to a fifth embodiment of the present disclosure.

The fifth embodiment of the present disclosure is different from the first to fourth embodiments in that a venting hole 211 is formed in the upper module case 210 so that flame or gas is guided to the venting hole. However, some descriptions of the first to fourth embodiments, which are common with the fifth embodiment, will also be applied to the fifth embodiment. In addition, some descriptions of the fifth embodiment, which are applicable to the first to fourth embodiments, may be applied to the first to fourth embodiments.

Referring to FIG. 8, a venting hole 211 may be formed in the upper module case 210 of the module case 200. In addition, when the shape of the flame propagation prevention member 300 is changed so that the movement path is blocked, the flame or gas may be guided to the venting hole 211.

Although the flame propagation prevention member 300 is illustrated to include the main part 310 and the head part 320 in FIG. 8, it is not limited thereto, and the flame propagation prevention member 300 may be configured as only the main part 310 without the head part 320.

In addition, although the convection heat barrier 330 is illustrated in FIG. 8, the convection heat barrier 330 may be excluded in another embodiment.

According to the embodiment in FIG. 8, if a flame or gas is generated, the flame or gas may be guided along a preset path and then discharged from the module case 200 of the battery module 10, thereby preventing heat transfer to another battery cell 100 or battery module 10.

That is, there is an effect of discharging the flame, gas, or high-temperature particles in a preset direction and preventing thermal runaway by preventing a chain reaction of flames due to flame propagation.

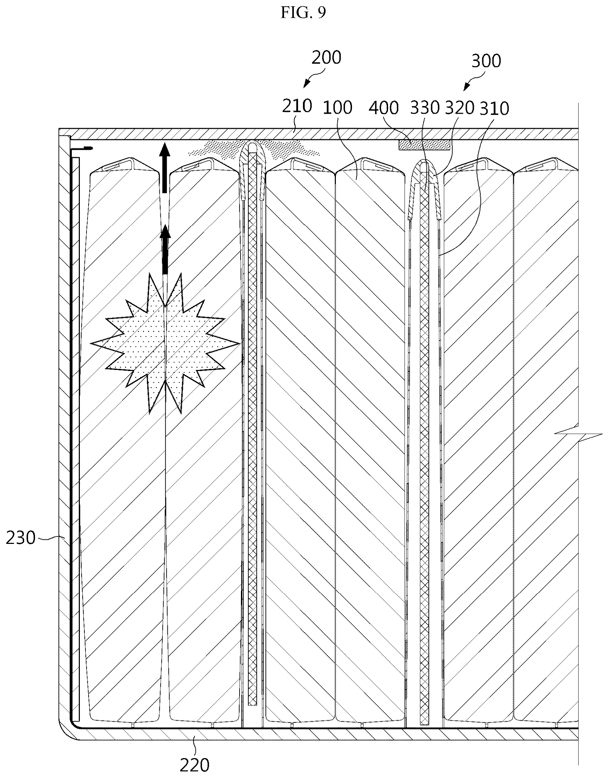

FIG. 9 is a cross-sectional view of a battery module according to a sixth embodiment of the present disclosure.

The sixth embodiment of the present disclosure is different from the first to fifth embodiments in that the battery module 10 includes an extinguishing member 400. However, some descriptions of the first to fifth embodiments, which are common with the sixth embodiment, will also be applied to the sixth embodiment. In addition, some descriptions of the sixth embodiment, which are applicable to the first to fifth embodiments, may be applied to the first to fifth embodiments.

Referring to FIG. 9, the extinguishing member 400 may be coupled to the module case 200. For example, the extinguishing member 400 may be coupled to the upper module case 210, but is not limited thereto. In addition, the extinguishing member 400 contains an extinguishing agent. Here, the extinguishing agent may be various, and for example, may be various extinguishing liquids or extinguishing powders, but is not limited thereto.

In addition, if the shape of the main part 310 of the flame propagation prevention member 300 is changed, the head part 320 may be configured to break the extinguishing member 400. In this case, the extinguishing agent contained in the extinguishing member 400 broken by the head part 320 may be provided to a flame, enabling initial fire suppression, to prevent thermal runaway and also cool the battery cell 100.

Referring to FIG. 9, the head part 320 of the flame propagation prevention member 300 may be configured so that the cross-sectional width decreases from bottom to top, and for example, may be formed in a shape similar to a bullet as shown in FIG. 9. In addition, the head part 320 may have a sharp upper end to easily break the extinguishing member 400.

Although the head part 320 in the shape described above may be configured to collide with and break the extinguishing member 400, the shape of the head part 320 is not limited to above description.

In addition, although the convection heat barrier 330 is illustrated in FIG. 9, the convection heat barrier 330 may be excluded in another embodiment.

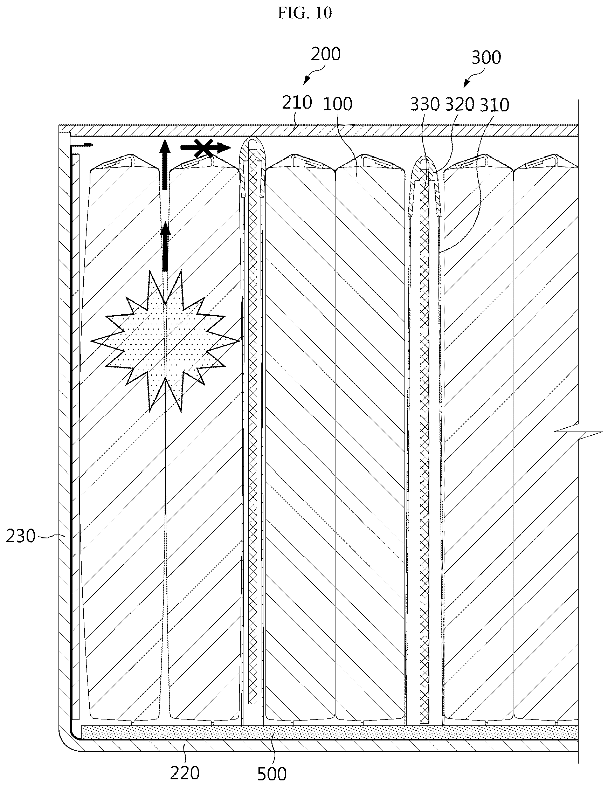

FIG. 10 is a cross-sectional view of a battery module according to a seventh embodiment of the present disclosure.

The seventh embodiment of the present disclosure is different from the first to sixth embodiments in that the battery module 10 includes a cooling member 500. However, some descriptions of the first to sixth embodiments, which are common with the seventh embodiment, will also be applied to the seventh embodiment. In addition, some descriptions of the seventh embodiment, which are applicable to the first to sixth embodiments, may be applied to the first to sixth embodiments.

Referring to FIG. 10, the battery module 10 may include a cooling member 500. The cooling member 500 may be disposed in various locations, and for example, may be coupled to the lower module case 220. In addition, the battery cell 100 and the flame propagation prevention member 300 may be in contact with the upper surface of the cooling member 500.

Here, the flame propagation prevention member 300 may be formed of a thermally conductive material. For example, as described above, the main part 310 of the flame propagation prevention member 300 may be made of stainless steel, and in this case, heat may be transferred through the main part 310.

As shown in FIG. 10, if the shape of the main part 310 changes due to occurrence of a thermal event, the top of the flame propagation prevention member 300 may come into contact with the upper module case 210, thereby preventing the propagation of flame, gas, or high-temperature particles, and the bottom of the flame propagation prevention member 300 may come into contact with the cooling member 500, thereby cooling the battery cell 100.

Meanwhile, as a modification of the embodiment in FIG. 10, the flame propagation prevention member 300 may be configured not to come into contact with the cooling member 500 in the normal state of the battery module 10, and the bottom of the flame propagation prevention member 300 may come into contact with the cooling member 500 when the shape of the flame propagation prevention member 300 changes due to a thermal event occurring.

In addition, although the convection heat barrier 330 is illustrated in FIG. 10, the convection heat barrier 330 may be excluded in another embodiment.

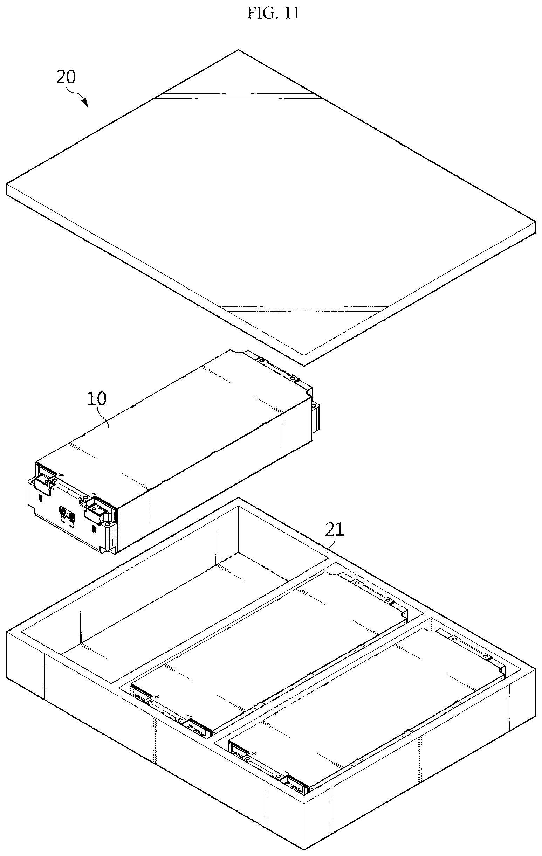

FIG. 11 is a diagram schematically illustrating the configuration of a battery pack including a battery module according to respective embodiments of the present disclosure.

Referring to FIG. 11, a battery pack 20 according to an embodiment of the present disclosure may include one or more battery modules 10 according to the respective embodiments of the present disclosure described above.

In addition, the battery pack 20 may further include a pack case 21 for storing the battery module 10, and various devices for controlling charging and discharging of the battery cell 100 included in the battery module 10, such as a BMS, a current sensor, and a fuse.

The pack case 21 stores a plurality of battery cells 100. The pack case 21 may be configured to include, for example, an upper frame, a side frame, a partition frame, and a lower frame.

In addition, it may include a control module configured to control charging and discharging of the battery cell 100. This control module may include, for example, a battery management system (BMS) and a battery blocking unit.

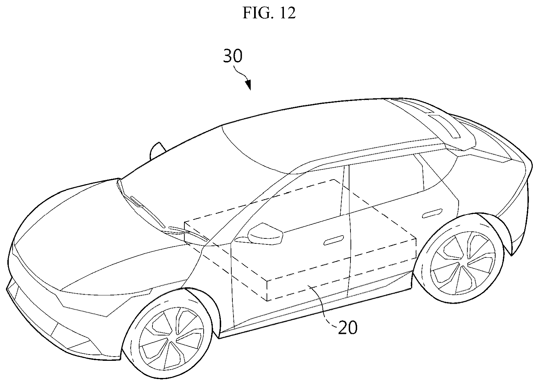

FIG. 12 is a diagram illustrating a vehicle including the battery pack in FIG. 11.

Referring to FIG. 12, a vehicle 30 according to an embodiment of the present disclosure may include one or more battery modules 10 according to the respective embodiments of the present disclosure described above or battery packs 20 according to the respective embodiments of the present disclosure described above. Here, the battery pack 20 may include one or more battery modules 10 according to the respective embodiments of the present disclosure described above.

Here, the vehicle 30 may include various vehicles designed to use electricity, such as an electric vehicle or a hybrid vehicle.

Meanwhile, in another embodiment, the battery pack 20 may include, excluding the module case 200 of the battery module 10, a plurality of battery cells 100, a pack case 21 for storing the plurality of battery cells 100, and a flame propagation prevention member 300 disposed between the plurality of battery cells 100 inside the pack case 21.

Here, the flame propagation prevention member 300 is configured to change its shape when a thermal event occurs to block the gap formed between the pack case 21 and the battery cells 100.

However, in the case where a plurality of battery cells 100 are stored in the pack case 21 without the module case 200 of the battery module 10 and where the flame propagation prevention member 300 is disposed between the plurality of battery cells 100, the pack case 21 may perform similar functions to those of the module case 200, and the flame propagation prevention member 300 may also have the same function, operation, and effect, so the detailed descriptions of the battery cell 100, the pack case 21, and the flame propagation prevention member 300 made above will be applied thereto.

In addition, if the module case 200 of the battery module 10 is removed, the battery cells 100 may be directly stored in the pack case 21 of the battery pack 20.

Here, a cell cover may be provided to support the battery cells 100 so that the battery cells 100 may be directly stored in the pack case 21. The cell cover may have various shapes, and for example, may be configured in an "n" shape, a "u" shape, or a " 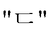 " shape surrounding three sides of at least one battery cell 100. However, it is not limited thereto.

According to the configuration above, since the battery cell 100 may be further stored in the space occupied by the module case 200 of the battery module 10 inside the battery pack 20, there is the effect of increasing the space efficiency and improving the battery capacity.

Meanwhile, the vehicle 30 according to another embodiment of the present disclosure may include one or more battery packs 20 described above, i.e., the battery packs 20 in which the battery cells 100 are directly stored in the pack case 21, excluding the module case 200 of the battery module 10.

Here, the vehicle 30 may include various vehicles designed to use electricity, such as an electric vehicle or a hybrid vehicle.

Although terms indicating directions such as up, down, left, and right are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. That is, the true scope of the technical idea of the present disclosure is shown in the claims, and all differences within the scope equivalent thereto should be construed as being included in the present disclosure.

### INDUSTRIAL APPLICABILITY

The present disclosure relates to a battery module, a battery pack, and a vehicle, and is particularly applicable to industries related to secondary batteries.

## Claims

1. A battery module comprising:
a plurality of battery cells;
a module case in which the plurality of battery cells are stored; and
a flame propagation prevention member disposed between the plurality of battery cells inside the module case,
wherein the flame propagation prevention member is configured to change its shape when a thermal event occurs so as to block a gap formed between the module case and the battery cells.

2. The battery module according to claim 1,
wherein the module case comprises an upper module case, and
wherein the flame propagation prevention member is configured to change its shape when swelling occurs in the cell so as to come into contact with the upper module case.

3. The battery module according to claim 2,
wherein the flame propagation prevention member comprises:
a main part pressurized by the battery cell when the swelling occurs in the cell; and
a head part coupled to a top of the main part and configured to come into contact with the upper module case.

4. The battery module according to claim 3,
wherein the main part is formed of a plastic injection molded product or stainless steel.

5. The battery module according to claim 3,
wherein the head part is formed of heat-resistant plastic.

6. The battery module according to claim 3,
wherein a convection heat barrier is provided inside the main part to block heat transfer by convection inside the main part.

7. The battery module according to claim 3,
wherein a coupling hole is formed in the main part, and
wherein the head part is coupled to the coupling hole.

8. The battery module according to claim 3,
further comprising an extinguishing member coupled to the module case and containing an extinguishing agent,
wherein the head part is configured to break the extinguishing member so that the extinguishing agent is provided to flame.

9. The battery module according to claim 8,
wherein the head part is configured so that a cross-sectional width decreases from bottom to top.

10. The battery module according to claim 9,
wherein the head part has a sharp upper end.

11. The battery module according to claim 1,
wherein the module case has a venting hole formed therein, and
wherein, if a movement path is blocked due to a change in the shape of the flame propagation prevention member, flame or gas is guided to the venting hole.

12. The battery module according to claim 1,
further comprising a cooling member configured to cool the battery cell,
wherein the flame propagation prevention member is formed of a thermally conductive material and is in contact with the cooling member.

13. The battery module according to claim 12,
wherein the flame propagation prevention member is configured not to come into contact with the cooling member and, if the shape of the flame propagation prevention member changes when a thermal event occurs, to come into contact with the cooling member.

14. A battery pack comprising the battery module according to any one of claims 1 to 13.

15. A vehicle comprising the battery module according to any one of claims 1 to 13.

16. A battery pack comprising:
a plurality of battery cells;
a pack case in which the plurality of battery cells are stored; and
a flame propagation prevention member disposed between the plurality of battery cells inside the pack case,
wherein the flame propagation prevention member is configured to change its shape when a thermal event occurs so as to block a gap formed between the pack case and the battery cells.

17. A vehicle comprising a battery pack according to claim 16.
